# EUROPEAN PATENT APPLICATION

(11) **EP 2 708 995 A1**
(43) Date of publication of application: **19.03.2014**
(21) Application number: 12782145.2
(22) Date of filing: 11.05.2012
(51) Int. Cl.: G06F 3/048, G06F 3/041, H04M 1/247

(54) **ELECTRONIC DEVICE, METHOD FOR CONTROLLING SAME AND PROGRAM**

(30) Priority: 12.05.2011 JP 2011107159
(71) Applicant: NEC CASIO Mobile Communications, Ltd., Kawasaki-shi Kanagawa 211-8666 (JP)
(72) Inventor: TAI, Ryusuke, Kawasaki-Shi, Kanagawa 211-8666 (JP)
(74) Representative: Vossius & Partner
(86) International application number: PCT/JP2012/062116
(87) International publication number: WO 2012/153833

(57) **Abstract**

An electronic apparatus includes a display unit configured to display an image, an operation unit capable of detecting plural input positions, and a control unit (as shown in Fig. 1). The control unit computes an operation target region that is formed by the plural input positions detected by the operation unit and performs first processing on plural operation targets included in the operation target region and associated with the image displayed on the display unit, according to a change in the area of the operation target region.

## Description

### [Field]

### (REFERENCE TO RELATED APPLICATION)

This application is based upon and claims the benefit of the priority of Japanese Patent Application No. 2011-107159 filed on May 12, 2011, the disclosure of which is incorporated herein in its entirety by reference thereto.

The present invention relates to an electronic apparatus, a control method for the electronic apparatus, and a program. More specifically, the invention relates to an electronic apparatus including a device capable to detecting plural depressed points.

### [Background]

Electronic apparatuses such as cellular phones, PHS (Personal Handyphone Systems), PDAs (Personal Digital Assistants), game apparatuses, notebook PCs (Personal Computers) often include input devices such as touch panels. It is because a lot of electronic apparatuses in recent years in particular include high-definition display screens, and an intuitive operation on each electronic apparatus can be performed by combining icon display and a touch panel.

Patent Literature 1 discloses a technology whereby an image is displayed on an electronic apparatus, and a finger is moved up and down in a state of touching a touch panel, thereby scrolling the image. Patent Literature 1 also discloses a technology whereby the touch panel is touched by two fingers and then by widening or reducing the distance between the two fingers, an image to be displayed is enlarged or reduced.

Further, Patent Literature 2 discloses a technology whereby a user can simultaneously select plural menus by an intuitive operation.

### [Citation List]

### [Patent Literature]

### [PTL 1]

Japanese Patent Kokai Publication No. JP2010-134938A

### [PTL 2]

Japanese Patent Kokai Publication No. JP2010-108277A

### [Summary]

### [Technical Problem]

Each disclosure of the above-listed prior art documents is incorporated herein by reference. The following analysis has been performed in terms of the present invention.

As described above, a user can intuitively perform an operation on the electronic apparatus by using the touch panel. However, there is a problem that, with regard to an operation that handles plural data, the user cannot achieve the operation with appropriate intuitiveness. To take an example, in order to delete the plural data, the user needs to move each of the plural data to a trash box, or needs to call up a menu to delete the data, after each data has been selected. When there is a large quantity of the data to be deleted, however, it is necessary to repeat an operation of selecting and deleting each of the data, thus requiring the user to perform a cumbersome operation.

As described above, an interface by which the operation on the plural data can be intuitively performed is not provided for the electronic apparatus including the touch panel. That is, the intuitive operation using the touch panel is used only in a limited way, and the interface of the electronic apparatus targeted for the plural data has a problem to be solved. For that reason, an electronic apparatus including an interface by which data processing can be achieved by an intuitive operation, a control method for the electronic apparatus, and a program are desired.

### [Solution to Problem]

According to a first aspect of the present invention, there is provided an electronic apparatus comprising: a display unit configured to display an image; an operation unit capable of detecting plural input positions; and a control unit configured to compute an operation target region that is formed by the plural input positions detected by the operation unit, and to perform first processing on plural operation targets included in the operation target region and associated with the image displayed on the display unit, according to a change in an area of the operation target region.

According to a second aspect of the present invention, there is provided a control method for an electronic apparatus, the electronic apparatus comprising: a display unit configured to display an image; and an operation unit capable of detecting plural input positions; the control method comprising the steps of: computing an operation target region that is formed by the plural input positions detected by the operation unit; detecting a change in an area of the operation target region; and performing first processing on plural operation targets included in the operation target region and associated with the image displayed on the display unit, according to a change in the area of the operation target region.
This method is linked to a specific machine that is the electronic apparatus comprising the display unit configured to display an image, and the operation unit capable of detecting plural input positions.

According to a third aspect of the present invention, there is provided a program for a computer configured to control an electronic apparatus, the electronic apparatus comprising: a display unit configured to display an image; and an operation unit capable of detecting plural input positions; the program causing the computer to execute processing of: computing an operation target region that is formed by the plural input positions detected by the operation unit; detecting a change in an area of the operation target region; and performing first processing on plural operation targets included in the operation target region and associated with the image displayed on the display unit, according to a change in the area of the operation target region.
This program can be recorded in a computer-readable storage medium. The storage medium can be set to a non-transient storage medium such as a semiconductor memory, a hard disk, a magnetic storage medium, or an optical recording medium. The present invention can also be embodied as a computer program product.

### [Advantageous Effects of Invention]

According to each aspect of the present invention, there are provided the electronic apparatus including an interface whereby data processing can be achieved by an intuitive operation, a control method for the electronic apparatus, and a program.

### [Brief Description of Drawings]

Fig. 1 is a diagram for explaining an overview of an exemplary embodiment.
Fig. 2 is a diagram showing an example of an outer appearance of an electronic apparatus according to a first exemplary embodiment.
Fig. 3 is a diagram showing an example of an internal configuration of the electronic apparatus shown in Fig. 2.
Fig. 4 is a flowchart showing an example of operations of the electronic apparatus when a user operates the electronic apparatus.
Fig. 5 shows an example of a display screen for explaining the operation shown in Fig. 4.
Fig. 6 is a diagram showing an example of a table for managing files shown in Fig. 5.
Fig. 7 shows an example of the display screen for explaining the operation shown in Fig. 4.
Fig. 8 shows an example of the display screen for explaining the operation shown in Fig. 4.
Fig. 9 shows an example of the display screen for explaining the operation shown in Fig. 4.
Fig. 10 is a diagram showing an example of a table for managing depressed points.
Fig. 11 shows an example of the display screen for explaining the operation shown in Fig. 4.
Fig. 12 shows an example of the display screen for explaining the operation shown in Fig. 4.
Fig. 13 shows an example of the display screen for explaining the operation shown in Fig. 4.
Fig. 14 shows an example of the display screen for explaining the operation shown in Fig. 4.
Fig. 15 shows an example of the display screen for explaining the operation shown in Fig. 4.
Fig. 16 shows an example of the display screen for explaining the operation shown in Fig. 4.
Fig. 17 is a flowchart showing an example of operations of an electronic apparatus when the electronic apparatus according to a second exemplary embodiment is operated.
Fig. 18 shows an example of a display screen for explaining the operation shown in Fig. 17.
Fig. 19 shows an example of the display screen for explaining the operation shown in Fig. 17.
Fig. 20 shows an example of the display screen for explaining the operation shown in Fig. 17.
Fig. 21 shows an example of the display screen for explaining the operation shown in Fig. 17.
Fig. 22 shows an example of the display screen for explaining the operation shown in Fig. 17.
Fig. 23 is a flowchart explaining an example of operations of an electronic apparatus when the electronic apparatus according to a third exemplary embodiment is operated.
Fig. 24 is a flowchart explaining an example of operations of an electronic apparatus when the electronic apparatus according to a fourth exemplary embodiment is operated.

### [Description of Embodiments]

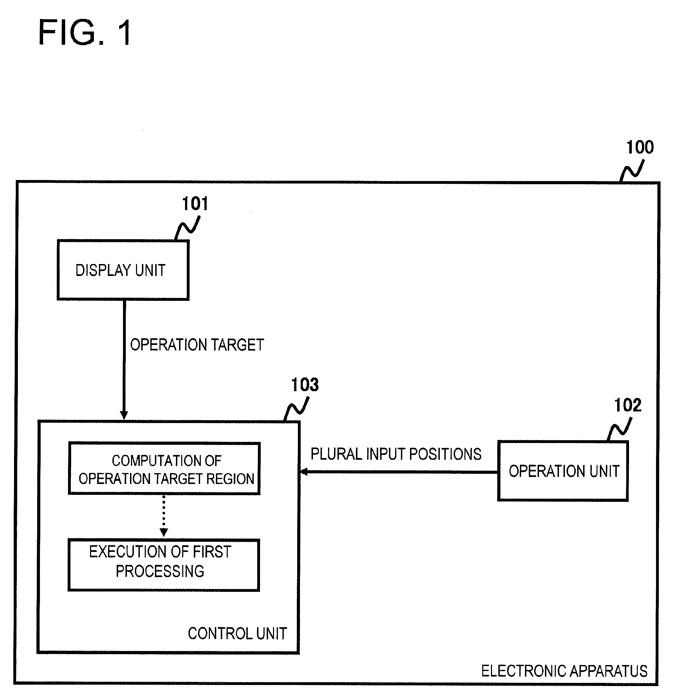

First, an overview of an exemplary embodiment will be explained, using Fig. 1. A reference sign in each drawing appended to this overview is given for convenience as an example for helping understanding, and does not intend to limit the present invention to the mode that has been illustrated.

As described above, an interface by which an operation on plural data can be intuitively performed is not provided for an electronic apparatus including a touch panel. For that reason, an electronic apparatus including an interface by which data processing can be achieved by an intuitive operation, a control method for the electronic apparatus, and a program are desired.

Then, an electronic apparatus 100 shown in Fig. 1 is provided as an example. The electronic apparatus 100 shown in Fig. 1 includes a display unit 101 configured to display an image, an operation unit 102 capable of detecting plural input positions, and a control unit 103. The control unit 103 computes an operation target region that is formed by the plural input positions detected by the operation unit 102, and performs first processing on plural operation targets included in the operation target region and associated with the image displayed on the display unit 101, according to a change in the area of the operation target region.

The control unit 103 detects that a user has performed plural operations associated with inputs on the operation unit 102. Then, the control unit 103 computes the region that is formed by the plural input positions, as the operation target region. Simultaneously, the control unit 103 considers that the user has performed an operation of grasping an object when the area of the operation target region is reduced. Then, the control unit 103 executes the first processing on the plural operation targets associated with the image comprising icons or the like displayed on the display unit 101. The first processing may be herein considered to be processing for merging the operation targets or the like.

As mentioned above, when the user performs the operation such as the one of grasping plural selected targets by his hand, the control unit 103 performs processing of merging the plural selected operation targets or the like. Consequently, even if there are the plural operation targets, the user can perform an intuitive operation. That is, the electronic apparatus including the interface by which data processing is achieved by the intuitive operation can be provided.

### [First Exemplary Embodiment]

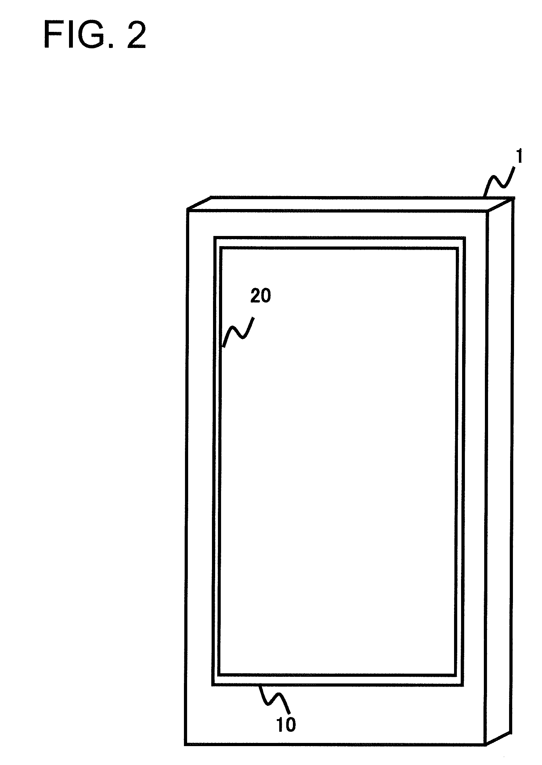

Next, a first exemplary embodiment will be described in more detail using drawings. Fig. 2 is a diagram showing an example of an outer appearance of an electronic apparatus 1 according to this exemplary embodiment. The electronic apparatus 1 includes a display unit 10 and a touch panel 20. The display unit 10 displays information necessary for an operation by a user. The touch panel 20 receives the operation by the user. Though the description will be given, assuming that the touch panel 20 is a contact type touch panel, the touch panel is not limited to this type. A proximity detection type touch panel configured to detect proximity of a user's finger or the like can also be used.

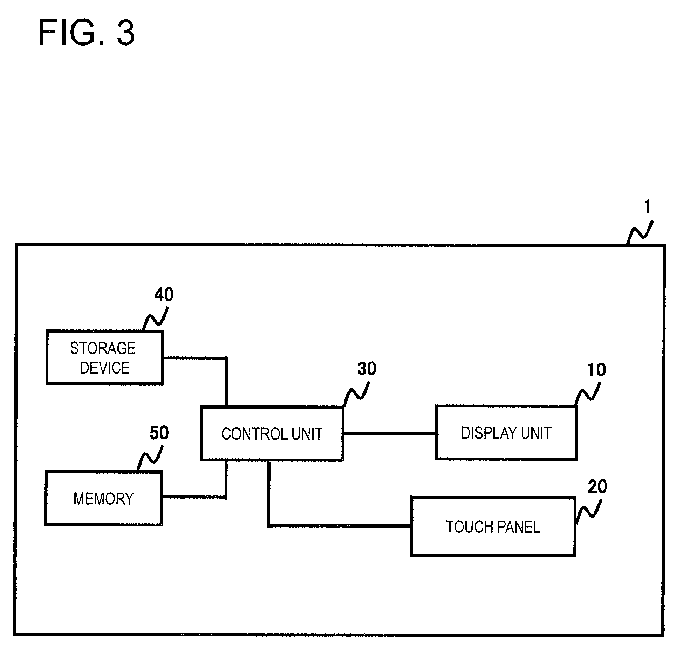

Fig. 3 is a diagram showing an example of an internal configuration of the electronic apparatus 1. The electronic apparatus 1 is constituted from the display unit 10, the touch panel 20, a control unit 30, a storage device 40, and a memory 50. The display unit 10 and the touch panel 20 are as described above. Further explanation of the display unit 10 and the touch panel 20 will be therefore omitted.

The control unit 30 controls the display unit 10 and the touch panel 20. The storage device 40 stores a program for controlling the electronic apparatus 1 and data displayed as an icon, and the like. The memory 50 is used as a primary storage medium.

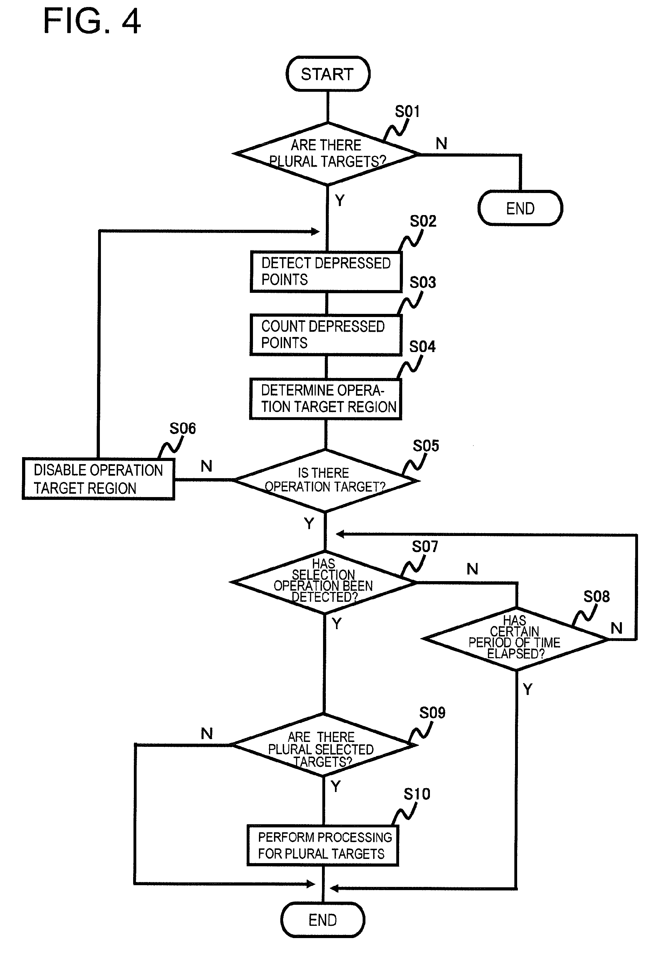

Next, operations of the electronic apparatus 1 when the user operates the electronic apparatus 1 will be described. Fig. 4 is a flowchart showing an example of the operations of the electronic apparatus 1 when the user operates the electronic apparatus 1 using plural fingers. Each step in the flowchart shown in Fig. 4 is executed by the control unit 30.

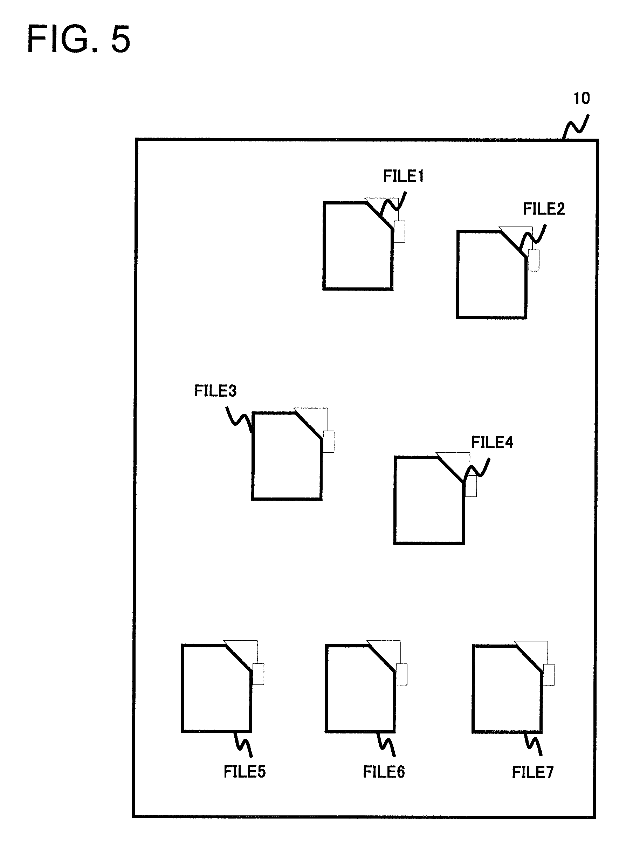

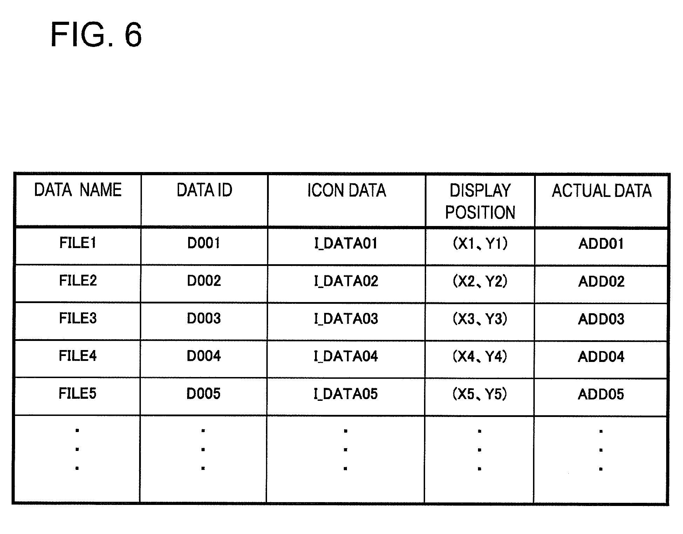

The description of the operations will be given, assuming that the operation by the user is performed on a display screen shown in Fig. 5. Seven files that are files FILE 1 to FILE 7 are displayed on the display screen shown in Fig. 5. The files FILE 1 to FILE 7 are managed by a table shown in Fig. 6. For each file, a data ID for identifying the file, icon data (thumbnail data), the display position of the icon or the like, and an address where actual data is present are stored in the table shown in Fig. 6. Data management is thereby performed.

In step S01, the control unit 30 determines whether or not there are plural operation targets (files or the like) on the display screen. When the control unit 30 determines that there are the plural operation targets, the procedure transitions to step S02. When the control unit 30 determines that there are not the plural operation targets, the procedure is finished.

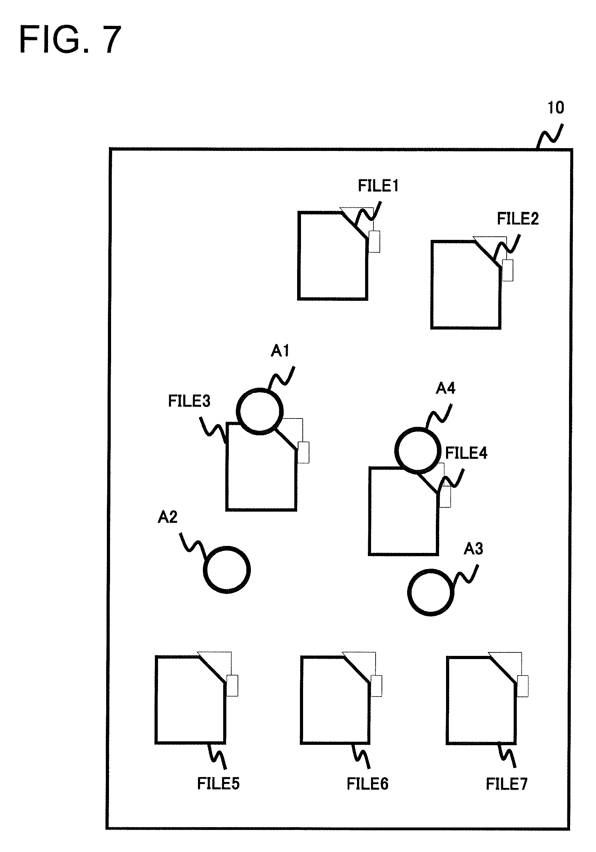

In step S02, the control unit 30 detects depressed points on the touch panel 20. It is herein assumed that four depressed points A1 to A4 have been depressed, as shown in Fig. 7.

In step S03, the control unit 30 counts the depressed points. The four depressed points are counted, based on Fig. 7.

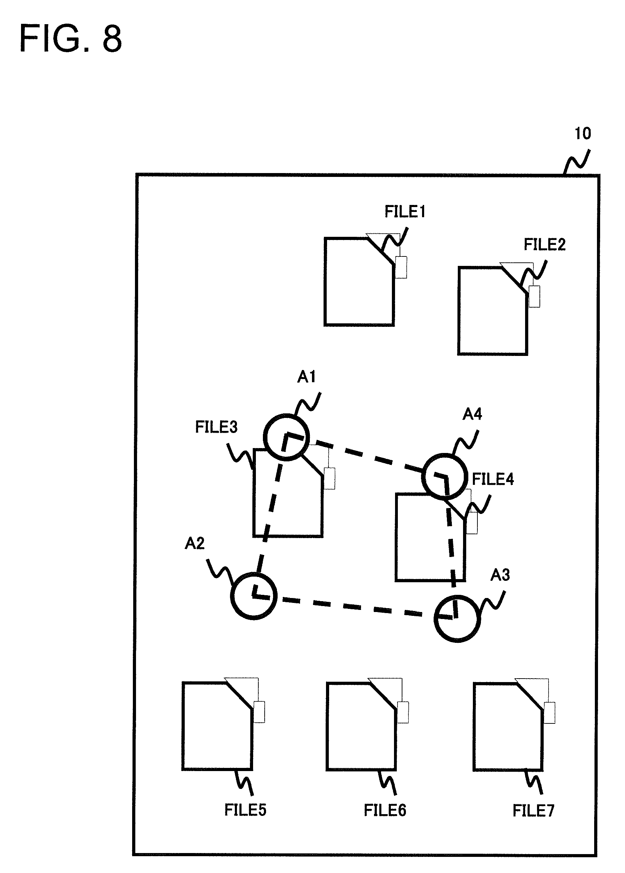

In step S04, the control unit 30 determines an operation target region that can be identified from the depressed points counted in step S03. The operation target region is defined to be a region formed by connecting the respective depressed points. When there are two depressed points, a straight line connecting the two points is determined to be the operation target region. With respect to the depressed points A1 to A4 shown in Fig. 7, a region enclosed by a dotted line in Fig. 8 is determined to be the operation target region. The dotted line shown in Fig. 8 does not need to be displayed on the display unit 10 of the electronic apparatus 1.

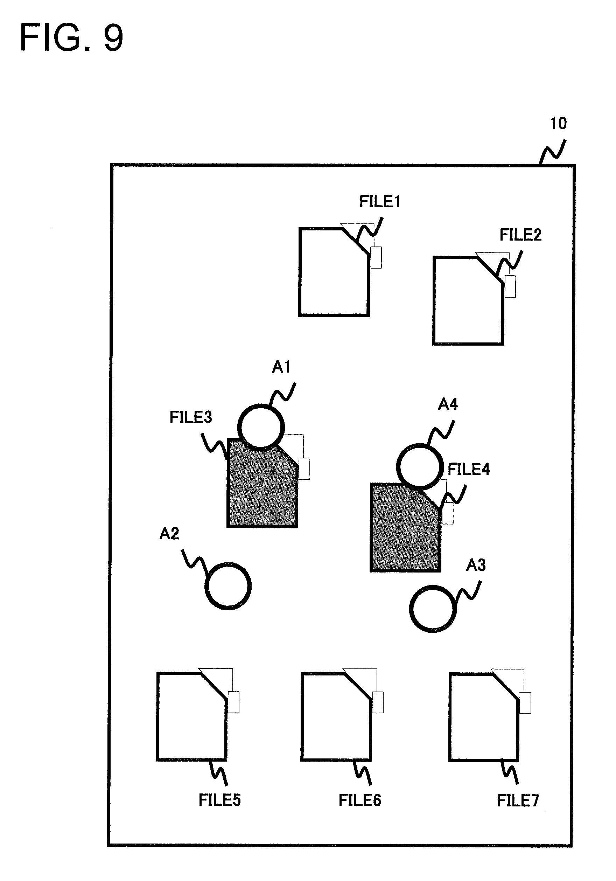

In step S05, the control unit 30 determines whether or not there is the file or the like that may be the operation target within the operation target region determined in step S04. When the control unit 30 determines that there is not the operation target, the procedure transitions to step S06. When the control unit 30 determines that there is the operation target, the procedure transitions to step S07. Herein, the files FILE3 and FILE4 are included in the operation target region as shown in Fig. 9. Thus, the procedure transitions to step S07. Further, in this step, the icons are highlighted in order to clearly demonstrate that the files FILE3 and FILE4 are the operation targets.

In step S06, the operation target region determined in step S04 has been released, and then the procedure transitions to step S02. The procedure is thereby continued.

In step S07, the control unit 30 determines whether or not a selection operation has been detected. The selection operation is an operation such as the one by which the area of the operation target region formed by the respective depressed points is reduced (concentrated on the inner side of the operation target region). When the selection operation is not detected, the procedure transitions to step S08. When the selection operation is detected, the process transitions to step S09.

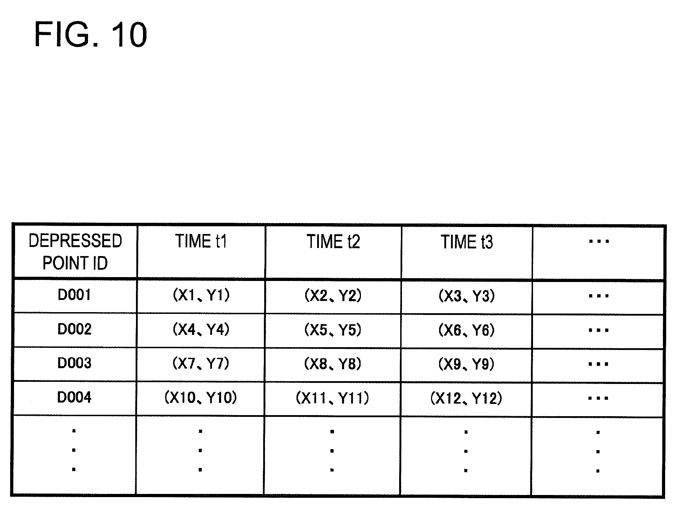

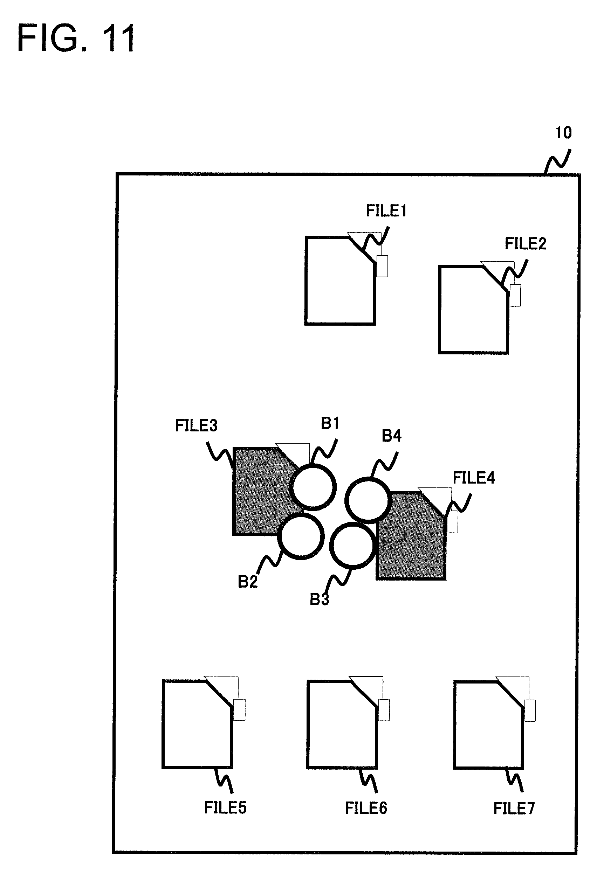

Management of each depressed point is performed by using a table as shown in Fig. 10. The table shown in Fig. 10 manages the position of each depressed point that changes with a lapse of time. The control unit 30 computes the area of the operation target region using the table shown in Fig. 10. When the computed area assumes a predetermined value or less, the control unit 30 determines that the selection operation has been performed. It is assumed herein that the depressed points A1 to A4 have changed to depressed points B1 to B4, as shown in Fig. 11. Since the area of the operation target region is reduced, it is determined that the selection operation has been performed. Accordingly, the procedure transitions to step S09. When the proximity detection type touch panel is used, a distance (z axis) between the touch panel and a finger or the like is added to coordinates shown in Fig. 10.

In step S08, the control unit 30 checks whether or not the process of detecting the selection operation has been continuously performed for a certain period of time. When the selection operation cannot be detected even if the certain period of time has elapsed, the procedure is finished. When the certain period of time has not elapsed, the procedure transitions to step S07. The procedure is thereby continued.

In step S09, the control unit 30 checks whether or not there are plural selected targets within the operation target region. When there are the plural selected targets, the procedure transitions to step S10. When there are not the plural selected targets, the procedure is finished.

In step S10, processing for plural targets is executed. The processing for plural targets is processing to be executed when plural selected targets are included in an operation target region. Various variations of the processing for plural targets are possible according to attributes (file types or the like) of the targets included in the operation target region.

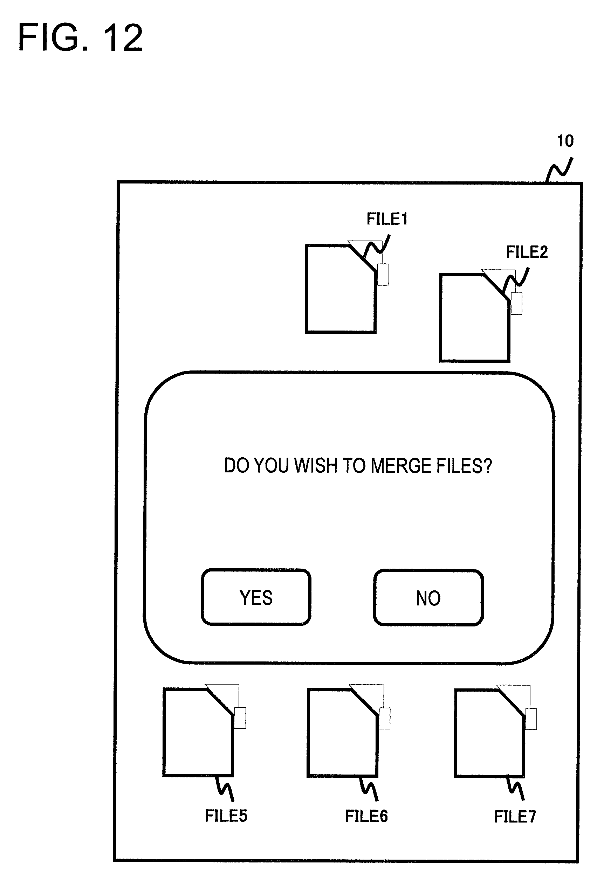

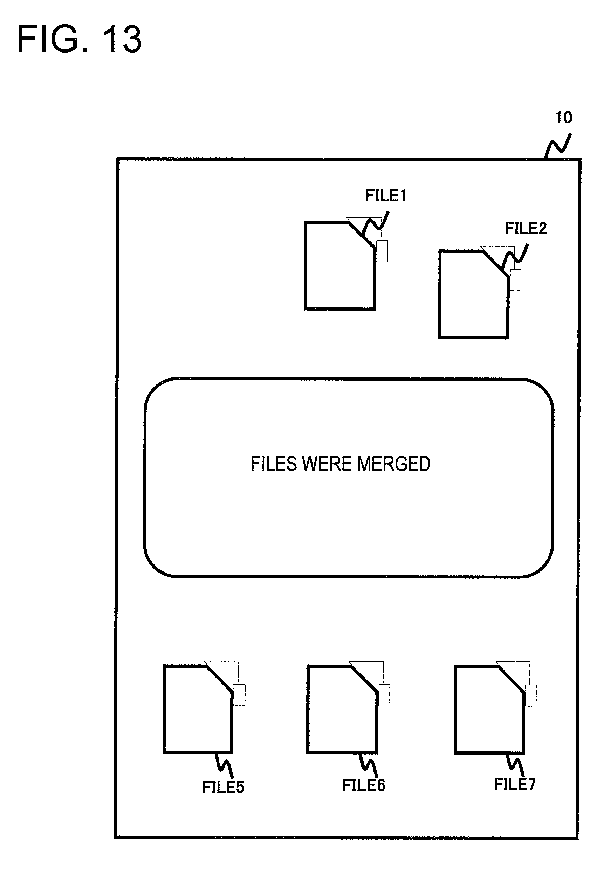

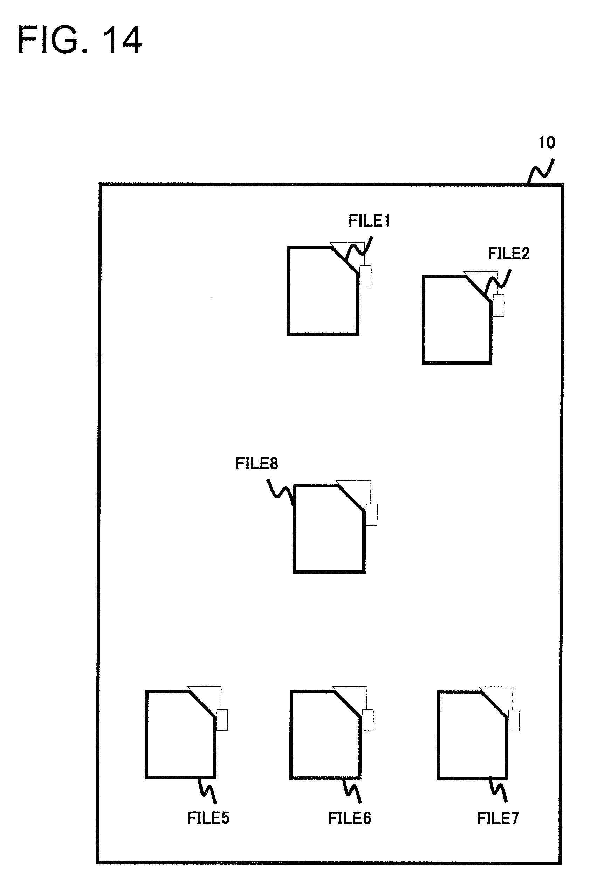

First, a description will be given about processing of merging files of plural targets having the attributes of a same type when these plural targets are included in the operation target region, as the processing for plural targets. It is assumed, for example, that the files FILE3 and FILE4 in Fig. 11 are text data. In this case, the control unit 30 merges both of the files. On that occasion, when the user accepts merger of the files after display shown in Fig. 12 has been performed, display shown in Fig. 13 is performed, and the control unit 30 merges the files (merges contents of the text files). A file obtained by the merger is newly generated as a file FILE 8 (refer to Fig. 14). The confirmation screens shown in Figs. 12 and 13 and operations associated with the confirmation screens can also be omitted.

The control unit 30 can automatically delete the files FILE3 and FILE4 or can leave the files FILE3 and FILE4 without alteration when the file FILE 8 is generated. In this exemplary embodiment, the description was given to the case where the files FILE3 and FILE4 were automatically deleted, together with generation of the file FILE 8.

Next, a description will be given to a case where the files FILE3 and FILE4 in Fig. 11 are files generated by a spreadsheet application. In this case, the control unit 30 can generate a new file having sheets included in both of the files. More specifically, by merging the file including two sheets and the file including three sheets, the control unit 30 newly generates the file including five sheets.

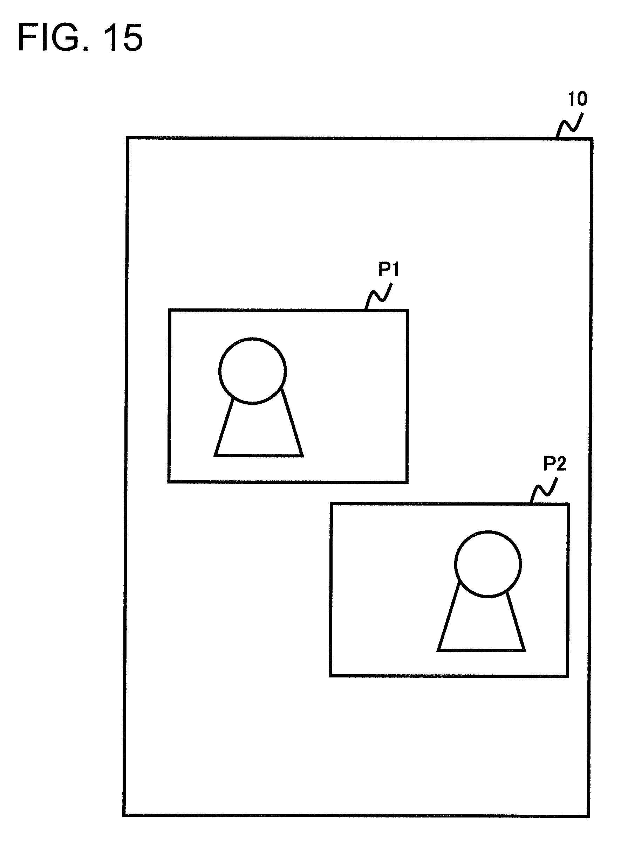

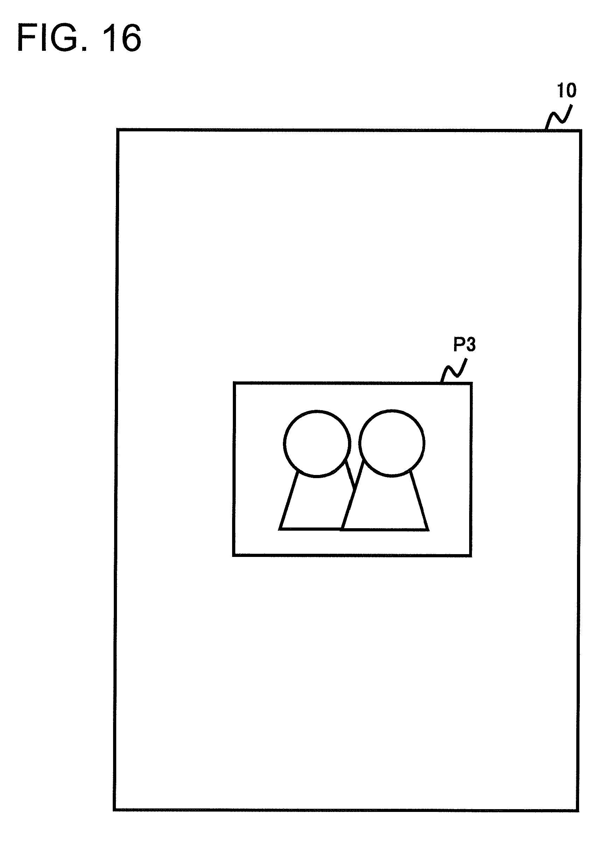

Next, a description will be given to a case where the files FILE3 and FILE4 are image files. In this case, the control unit 30 extracts main portions included in both of the image files, and then synthesizes the main portions into one image file. When image files P1 and P2 as shown in Fig. 15 are merged into an image file P3, for example, the control unit 30 extracts main portions of both of the image files (P1 and P2 respectively including persons), and then synthesizes those image files into the image file P3 that is new (refer to Fig. 16). An image processing technique such person recognition or face recognition can be used for extraction of the main portions. The control unit 30 also changes the thumbnail of the new image file P3 to an image after the merger. The background other than the main portions at the time of the merger (synthesis) of the image files can be selected from one of the image files before the merger, or the background itself can also be synthesized.

As described above, in the electronic apparatus 1 according to this exemplary embodiment, the plural files can be merged to generate the new file. When the user implements such an operation without using the procedure described in this exemplary embodiment, a cumbersome operation becomes necessary. To take an example, using a text editor, the user must open text files, and then must select and open the files to be merged when the text files are brought together. According to the procedure described in this exemplary embodiment, however, the user should perform an operation of grasping and bringing together two files. The files (data) can be merged by an intuitive operation.

### [Second Exemplary Embodiment]

Next, a second exemplary embodiment will be described in detail with reference to drawings. Since an outer appearance and an internal configuration of an electronic apparatus 1a according to this exemplary embodiment are not different from those of the electronic apparatus 1 according to the first exemplary embodiment, descriptions corresponding to those of Figs. 2 and 3 will be omitted.

The electronic apparatus 1a is different from the electronic apparatus 1 in operations when a user operates the electronic apparatus 1a, in particular, in the operations in step S09 and thereafter in Fig. 4.

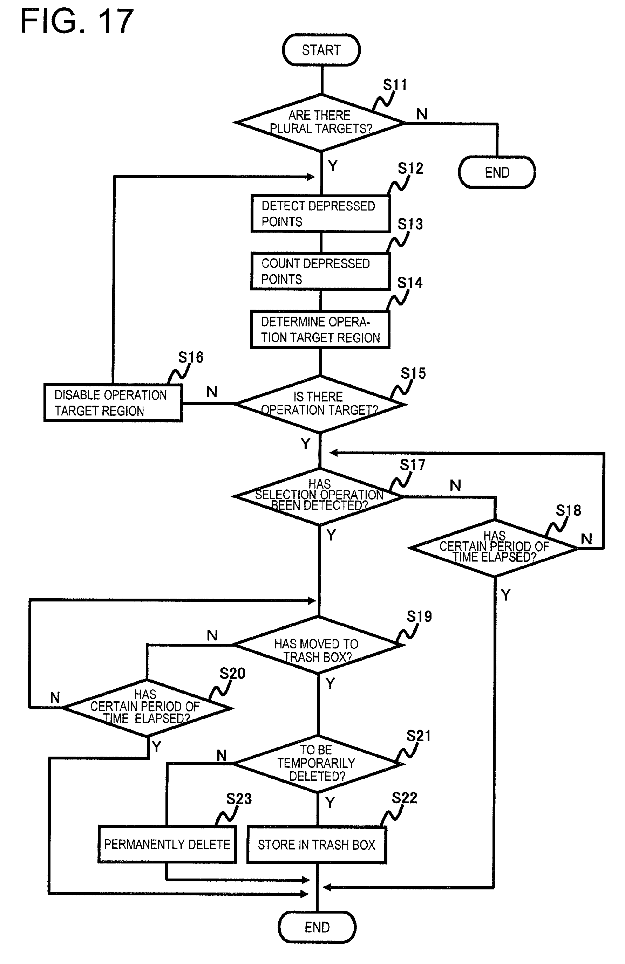

The operations of the electronic apparatus 1a when the user operates the electronic apparatus 1a will be described. Fig. 17 is a flowchart showing an example of the operations of the electronic apparatus 1a when the user operates the electronic apparatus 1a, using plural fingers. Since steps S11 to S18 in Fig. 17 are the same operations as those in steps S01 to S08 in Fig. 4, description about the steps S11 to S 18 will be omitted.

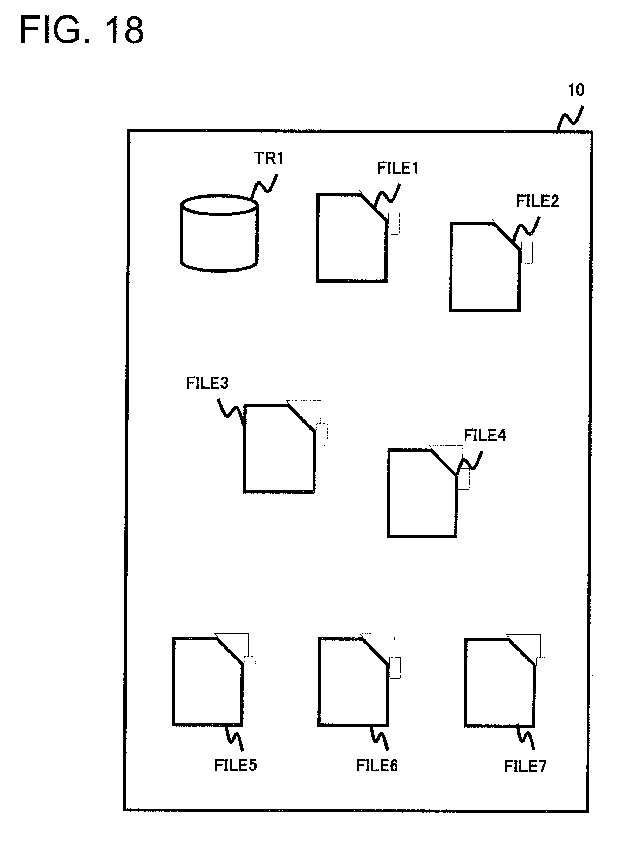

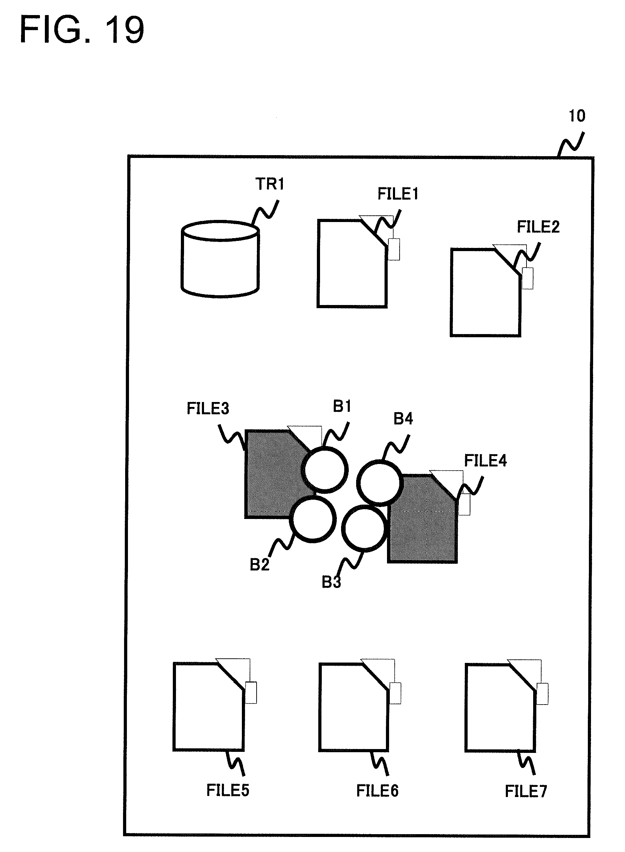

The description will be given, assuming that the operation by the user is performed on a display screen shown in Fig. 18. On the display shown in Fig. 18, files FILE1 to FILE 7 and a trash box TR1 are displayed. Further, as shown in Fig. 19, it is assumed that the user selects the files FILE3 and FILE4 using depressed points B1 to B4. The trash box TR1 can be defined to be a specific function region associated with execution of a predetermined function (data deletion). In addition to the trash box, icon display or the like associated with an application to be executed by the electronic apparatus 1 is included in the specific function region.

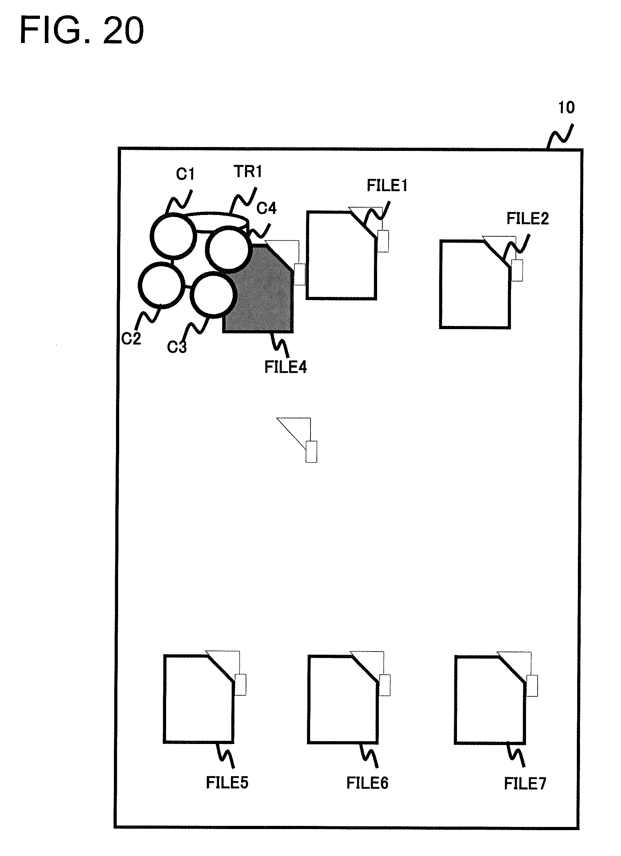

In step S19 in Fig. 17, it is determined whether or not the depressed points B1 to B4 used when a selection operation was detected in step S17 have moved to the trash box TR1. When the depressed points B1 to B4 have not moved to the trash box TR1, the procedure transitions to step S20. When the depressed points B1 to B4 have moved to the trash box TR1, the procedure transitions to step S21. It is herein assumed that depressed points C1 to C4 have moved to the trash box TR1 as shown in Fig. 20 (the procedure transitions to step S21).

In step S20, it is determined whether or not a certain period of time has elapsed since detection of the selection operation. When it is determined that the certain period of time has elapsed, the procedure is finished. When the certain period of time has not elapsed, the process in step S19 is continued.

In step S21, it is determined whether or not the data that has moved to the trash box TR1 is to be temporarily or permanently deleted. As a method of the determination, the determination may be made based on the number of detected depressed points. When the number of depressed points is three or less, for example, it is determined that the data is to be temporarily deleted. When the number of depressed points is four or more, it is determined that the data is to be permanently deleted. When it is determined that the data is to be temporarily deleted, the procedure transitions to step S22. When it is determined that the data is to be permanently deleted, the procedure transitions to step S23.

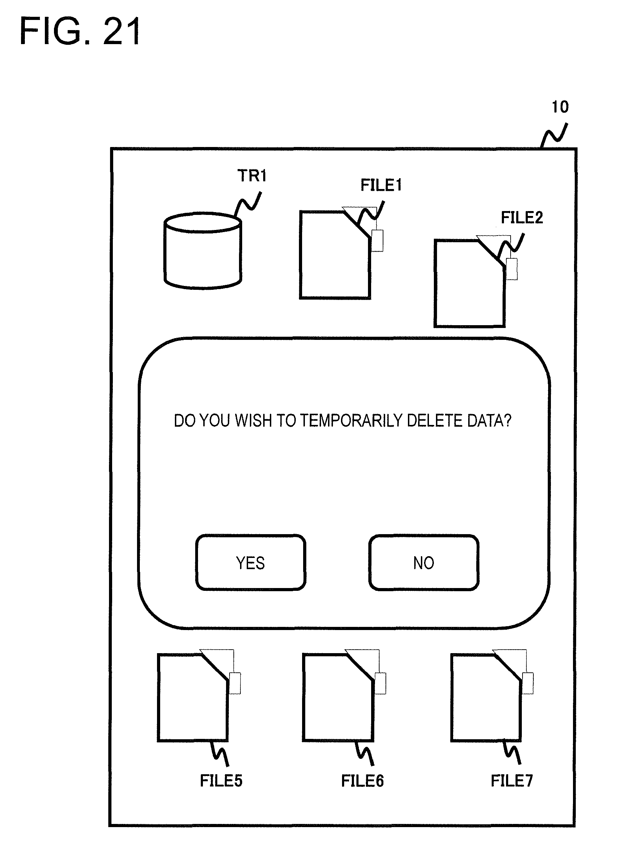

In step S22, the data that has been selected is stored in the trash box TR1, and then the procedure is finished. On that occasion, the control unit 30 displays a message shown in Fig. 21 to confirm user's final decision.

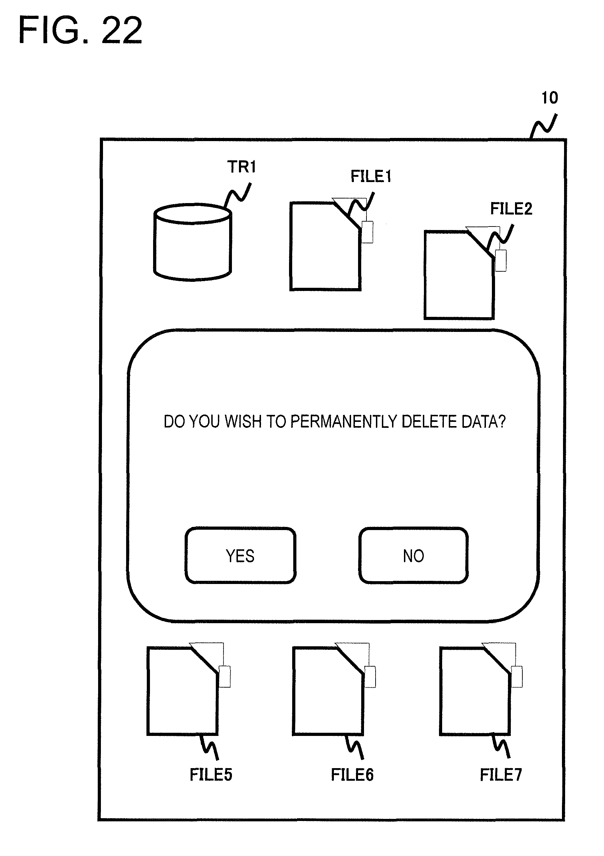

In step S23, the data that has been selected is permanently deleted, and then the procedure is finished. In this step as well, the control unit 30 displays a message shown in Fig. 22. The confirmation screens shown in Figs. 21 and 22 and operations associated with the confirmation screens can be omitted.

As described above, an operation of grasping the data that the user desires to delete and moving the data to the trash box is close to an actual operation of grasping and then discarding an object. Thus, an intuitive operation can be therefore performed. Further, in the electronic apparatus 1a according to this exemplary embodiment, temporary deletion or permanent deletion can be selected according to the fingers (number of depressed points) with which the user operates the electronic apparatus 1a. These temporary deletion and permanent deletion can be readily switched without performing a cumbersome operation.

### [Third Exemplary Embodiment]

Next, a third exemplary embodiment will be described in detail with reference to drawings. Since an outer appearance and an internal configuration of an electronic apparatus 1b according to this exemplary embodiment are not different from those of the electronic apparatus 1 according to the first exemplary embodiment, descriptions corresponding to those of Figs. 2 and 3 will be omitted. The electronic apparatus 1b is different from the electronic apparatus 1 in operations when a user operates the electronic apparatus 1b, in particular, in the operations in step S09 and thereafter in Fig. 4.

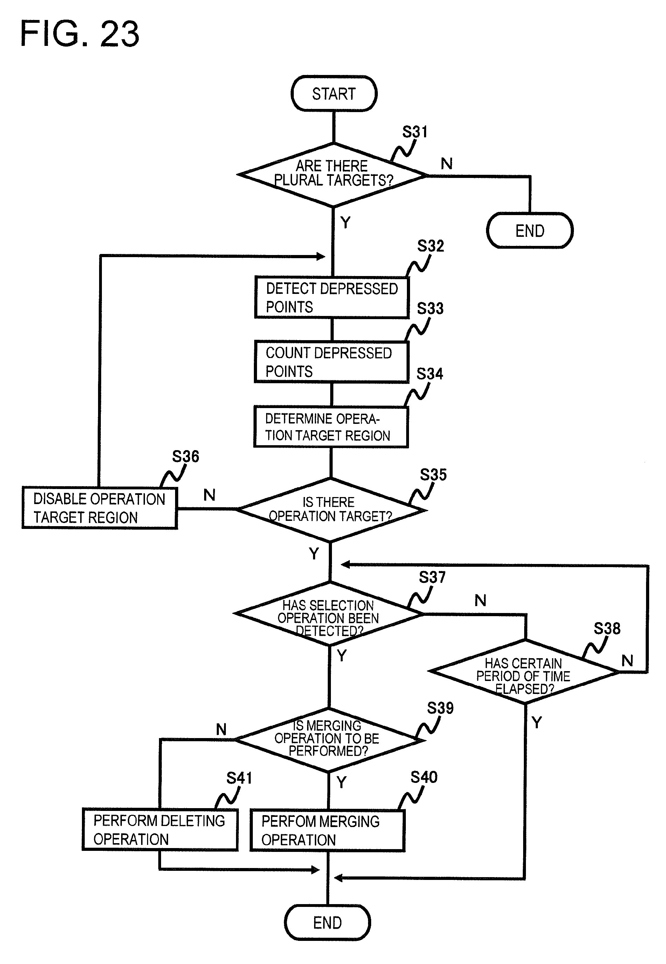

The operations of the electronic apparatus 1b when the user operates the electronic apparatus 1b will be described. Fig. 23 is a flowchart showing an example of the operations of the electronic apparatus 1b when the user operates the electronic apparatus 1b, using plural fingers. Since steps S31 to S38 in Fig. 23 are the same operations as those in steps S01 to S08 in Fig. 4, description about the steps S31 to S38 will be omitted.

In step S39, it is determined whether or not an operation of merging selected targets or an operation of deleting the selected targets is to be performed. As a method of the determination, the determination may be made, based on the number of detected depressed points. To take an example, when the number of depressed points is three or less, it is determined that the selected targets are to be merged. When the number of depressed points is four or more, it is determined that the selected targets are to be deleted. When a control unit 30 determines that the selected targets are to be merged, the procedure transitions to step S40. When the control unit 30 determines that the selected targets are to be deleted, the procedure transitions to step S41.

In step S40, the selected targets are merged. Then, the procedure is finished.

In step S41, the selected targets are deleted. Then, the procedure is finished.

As described above, in the electronic apparatus 1b according to this exemplary embodiment, the selected targets can be selected to be merged or deleted, according to the fingers with which the user operates the electronic apparatus 1b (the number of depressed points). Switching between these merging and deletion of the selected targets can be readily made without performing a cumbersome operation.

### [Fourth Exemplary Embodiment]

Next, a fourth exemplary embodiment will be described in detail with reference to drawings. Since an outer appearance and an internal configuration of an electronic apparatus 1c according to this exemplary embodiment are not different from those of the electronic apparatus 1 according to the first exemplary embodiment, descriptions corresponding to those of Figs. 2 and 3 will be omitted. The electronic apparatus 1c is different from the electronic apparatus 1 in operations when a user operates the electronic apparatus 1c, in particular, in the operations in step S10 and thereafter in Fig. 4. When the electronic apparatus 1c in this exemplary embodiment detects that depressed points have moved to a trash box TR1 after execution of the processing for plural targets (such as merging of files) in the first exemplary embodiment, the electronic apparatus 1c deletes the files before execution of the processing for plural targets. The files are deleted after execution of the processing for plural targets.

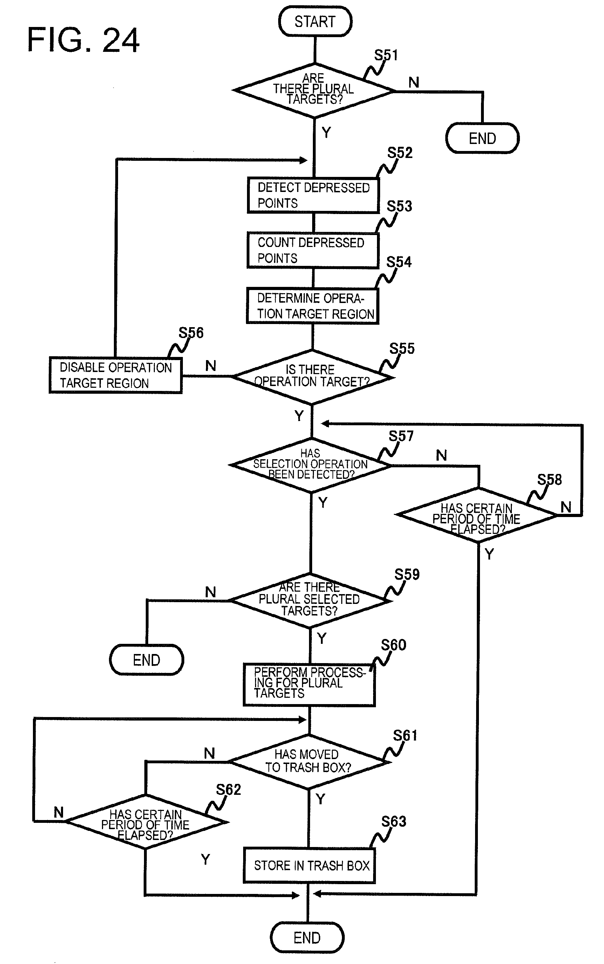

The operations of the electronic apparatus 1c when the user operates the electronic apparatus 1c will be described. Fig. 24 is a flowchart showing an example of the operations of the electronic apparatus 1c when the user operates the electronic apparatus 1c, using plural fingers. Since steps S51 to S60 in Fig. 24 are the same operations as those in steps S01 to S10 in Fig. 4, description about the steps S51 to S60 will be omitted.

In step S61, it is determined whether or not depressed points have moved to the trash box TR1 after execution of the processing for plural targets in step S60. When it is determined that the depressed points have not moved to the trash box TR1, the procedure transitions to step S62. When it is determined that the depressed points have moved to the trash box TR1, the procedure transitions to step S63.

In step S62, it is determined whether a certain period of time has elapsed after detection of the selection operation. When it is determined that the certain period of time has elapsed, the procedure is finished. When it is determined that the certain period of time has not elapsed, the process in step S61 is continued.

In step S63, the data that has moved to the trash box TR1 is stored in the trash box TR1. Then, the procedure is finished.

As described above, in the electronic apparatus 1c according to this exemplary embodiment, the plural operation targets can be merged, and the files before the merger can also be readily deleted.

Finally, preferred modes of the present invention are summarized.

### [Mode 1]

See the electronic apparatus according to the first aspect described above.

### [Mode 2]

The electronic apparatus, wherein
the control unit performs the first processing when the area of the operation target region is reduced to a value below a predetermined value.

### [Mode 3]

The electronic apparatus, wherein
the first processing is one of processing of merging the plural operation targets, processing of deleting the plural operation targets, and processing of temporarily deleting the plural operation targets.

### [Mode 4]

The electronic apparatus, wherein
the control unit performs the processing of merging the plural operation targets or the processing of deleting the plural operation targets according to the number of the plural input positions that form the operation target region.

### [Mode 5]

The electronic apparatus, wherein
the control unit performs the processing of deleting the plural operation targets or the processing of temporarily deleting the plural operation targets according to the number of the plural input positions that form the operation target region.

### [Mode 6]

The electronic apparatus, wherein
the control unit determines a mode of the processing of merging the plural operation targets, based on attributes of the plural operation targets.

### [Mode 7]

The electronic apparatus, wherein
after the control unit has performed processing of merging the plural operation targets and then the area of the operation target region has been reduced to a value below the predetermined value, the control unit deletes the plural operation targets when the input positions that form the operation target region move to a region associated with execution of data deletion.

### [Mode 8]

The electronic apparatus, wherein
after the area of the operation target region has been reduced to a value below the predetermined value, the control unit performs second processing in place of the first processing when the input positions that form the operation target region move to a specific function region associated with execution of a predetermined function.

### [Mode 9]

The electronic apparatus, wherein
the second processing is processing of deleting the plural targets that have been selected or processing of temporarily deleting the plural selected targets.

### [Mode 10]

See the control method for an electronic apparatus according to the second aspect described above.

### [Mode 11]

The control method for an electronic apparatus, wherein
in the step of performing the first processing, the first processing is performed when the area of the operation target region is reduced to a value below a predetermined value.

### [Mode 12]

The control method for an electronic apparatus, wherein
the first processing is one of processing of merging the plural operation targets, processing of deleting the plural operation targets, and processing of temporarily deleting the plural operation targets.

### [Mode 13]

The control method for an electronic apparatus, including the step of:
performing the processing of merging the plural operation targets or the processing of deleting the plural operation targets according to the number of the plural input positions that form the operation target region.

### [Mode 14]

The control method for an electronic apparatus, including the step of:
performing the processing of deleting the plural operation targets or the processing of temporarily deleting the plural operation targets according to the number of the plural input positions that form the operation target region.

### [Mode 15]

The control method for an electronic apparatus, wherein
a mode of the processing of merging the plural operation targets is determined, based on attributes of the plural operation targets.

### [Mode 16]

The control method for an electronic apparatus, including the step of:
after the processing of merging the plural operation targets has been executed and then the area of the operation target region has been reduced to a value below the predetermined value, deleting the plural operation targets when the input positions that form the operation target region move to a region associated with execution of data deletion.

### [Mode 17]

The control method for an electronic apparatus, including the step of:
after the area of the operation target region has been reduced to a value below the predetermined value, performing second processing in place of the first processing when the input positions that form the operation target region move to a specific function region associated with execution of a predetermined function.

### [Mode 18]

The control method for an electronic apparatus, wherein
the second processing is processing of deleting the plural targets that have been selected or processing of temporarily deleting the plural selected targets.

### [Mode 19]

See the program according to the third aspect described above.

### [Mode 20]

The program, wherein
in the processing of performing the first processing, the first processing is performed when the area of the operation target region is reduced to a value below a predetermined value.

### [Mode 21]

The program, wherein
the first processing is one of processing of merging the plural operation targets, processing of deleting the plural operation targets, and processing of temporarily deleting the plural operation targets.

### [Mode 22]

The program, wherein:
the processing of merging the plural operation targets or the processing of deleting the plural operation targets is performed according to the number of the plural input positions that form the operation target region.

### [Mode 23]

The program, wherein
the processing of deleting the plural operation targets or the processing of temporarily deleting the plural operation targets is performed according to the number of the plural input positions that form the operation target region.

### [Mode 24]

The program, wherein
a mode of the processing of merging the plural operation targets is determined, based on attributes of the plural operation targets.

### [Mode 25]

The program, wherein:
after the processing of merging the plural operation targets has been performed and then the area of the operation target region has been reduced to a value below the predetermined value, the processing of deleting the plural operation targets is executed when the input positions that form the operation target region move to a region associated with execution of data deletion.

### [Mode 26]

The program, wherein
after the area of the operation target region has been reduced to a value below the predetermined value, second processing is executed in place of the first processing when the input positions that form the operation target regions move to a specific function region associated with execution of a predetermined function.

### [Mode 27]

The program, wherein
the second processing is processing of deleting the plural targets that have been selected or processing of temporarily deleting the plural selected targets.

Each disclosure of the above-listed Patent Literatures and the like is incorporated herein by reference. Modifications and adjustments of the exemplary embodiments and an example are possible within the scope of the overall disclosure (including the claims) of the present invention and based on the technical concept of the present invention. Various combinations and selections of various disclosed elements (including each element in each claim, each element in each exemplary embodiment and the example, and each element in each drawing) are possible within the scope of the claims of the present invention. That is, the present invention naturally includes various variations and modifications that could be made by those skilled in the art according to the overall disclosure including the claims and the technical concept.

### [Reference Signs List]

- 1, 1a, 1b, 1c, 100: electronic apparatus
- 10, 101: display unit
- 20: touch panel
- 30, 103: control unit
- 40: storage device
- 50: memory
- 102: operation unit
- A1∼A4, B1∼B4, C1∼C4: depressed point
- FILE1∼FILE 8: file
- P1∼P3: image file
- TR1: trash box

## Claims

1. An electronic apparatus, comprising:
a display unit configured to display an image;
an operation unit capable of detecting plural input positions; and
a control unit configured to compute an operation target region that is formed by the plural input positions detected by the operation unit, and to perform first processing on plural operation target(s) included in the operation target region and associated with the image displayed on the display unit, according to a change in an area of the operation target region.

2. The electronic apparatus according to claim 1, wherein
the control unit performs the first processing when the area of the operation target region is reduced to a value below a predetermined value.

3. The electronic apparatus according to claim 1 or 2, wherein
the first processing is one of processing of merging the plural operation targets, processing of deleting the plural operation target(s), and processing of temporarily deleting the plural operation target(s).

4. The electronic apparatus according to any one of claims 1 to 3, wherein
the control unit performs the processing of merging the plural operation target(s) or the processing of deleting the plural operation targets according to a number of the plural input positions that form the operation target region.

5. The electronic apparatus according to any one of claims 1 to 3, wherein
the control unit performs the processing of deleting the plural operation target(s) or the processing of temporarily deleting the plural operation target(s) according to a number of the plural input positions that form the operation target region.

6. The electronic apparatus according to claim 3 or 4, wherein
the control unit determines a mode of the processing of merging the plural operation target(s), based on attributes of the plural operation target(s).

7. The electronic apparatus according to claim 1 or 2, wherein
after the control unit has performed processing of merging the plural operation target(s) and then the area of the operation target region has been reduced to a value below the predetermined value, the control unit deletes the plural operation target(s) when the input positions that form the operation target region move to a region associated with execution of data deletion.

8. The electronic apparatus according to claim 1, wherein
after the area of the operation target region has been reduced to a value below the predetermined value, the control unit performs second processing in place of the first processing when the input positions that form the operation target region move to a specific function region associated with execution of a predetermined function.

9. A control method for an electronic apparatus, the electronic apparatus comprising:
a display unit configured to display an image; and
an operation unit capable of detecting plural input positions;
the control method comprising the steps of:
computing an operation target region that is formed by the plural input positions detected by the operation unit;
detecting a change in an area of the operation target region; and
performing first processing on plural operation target(s) included in the operation target region and associated with the image displayed on the display unit, according to a change in the area of the operation target region.

10. A program for a computer configured to control an electronic apparatus, the electronic apparatus comprising:
a display unit configured to display an image; and
an operation unit capable of detecting plural input positions;
the program causing the computer to execute processing of:
computing an operation target region that is formed by the plural input positions detected by the operation unit;
detecting a change in an area of the operation target region; and
performing first processing on plural operation target(s) included in the operation target region and associated with the image displayed on the display unit, according to a change in the area of the operation target region.
